# EUROPEAN PATENT SPECIFICATION

(11) **EP 1 840 375 B1**
(45) Date of publication and mention of the grant of the patent: **26.11.2008**
(21) Application number: 07250108.3
(22) Date of filing: 11.01.2007
(51) Int. Cl.: F04B 35/04, F04B 39/06, F04B 17/04, H02K 3/24

(54) **Linear compressor assembly**
Linearverdichteranordnung
Assemblage d'un compresseur linéaire

(30) Priority: 24.03.2006 US 388432
(43) Date of publication of application: 03.10.2007
(73) Proprietor: INGERSOLL-RAND COMPANY, Montvale, NJ 07645 (US)
(72) Inventor: Haseley, Robert K., Mooresville North Carolina 28117 (US)
(74) Representative: Every, David Aidan

(56) References cited:
- EP-A- 0 793 019
- EP-A- 1 524 434
- WO-A-97/01033
- GB-A- 1 539 201
- KR-A- 20050 015 685
- US-A- 6 153 951

## Description

The present invention relates to a compressor and more particularly to a linearly actuated compressor that is electrically driven.

Linear actuator systems are applied to displace elements as diverse as railways and precision displacement machinery in closed loop and extended systems. The position of the element propelled by the linear actuator has been shown to be determined by a change of current and voltage passing through individual drive coils. For example, a voltage depression in one of the drive coils will indicate passage of the piston adjacent the drive coil. Control of an electric powered linear actuated pump or compressor represents an extremely complex design challenge. Therefore, it is critical to have a sensor which is reliable, simple and capable of responding to varied conditions (such as temperature, differing working fluids and corrosive materials) while responding with quick and repeatable indications about the position and velocity of the piston. It is problematic to precisely locate a piston relative to any drive coil based only upon measured voltage and currents through the drive coils because variations in temperature and the working fluid affect the voltages and currents. An apparatus having the technical features as defined in the preamble of patent claim 1 is disclosed in document US Patent 6,153,951.

Prior linear compressor designs have not addressed the problem of heat build-up. In medium and larger sized electric powered linear compressors, heat build-up represents such a problem as to be a limiting factor in compressor design.
According to the present invention there is provided an apparatus comprising: a housing having a bore formed therein, the bore being axially oriented along a first axis; a piston reciprocally disposed within the bore; a plurality of drive coils adjacent the bore for energizing the drive coils to produce a magnetic field capable of displacing the piston within the bore substantially along the first axis; the drive coils being configured such that they are energisable in a positive polarity to move the piston in a first direction and energisable in a negative polarity to move the piston in a second direction; a controller for selectively controlling energizing of the drive coils; and a cooling system at least partially disposed in the housing, the cooling system for cooling the apparatus.

In one embodiment, the invention provides for an apparatus including a housing having a bore formed therein, the bore being axially orientated along a first axis, a piston reciprocally disposed within the bore, and a plurality of drive coils adjacent the bore for energising the drive coils to produce a magnetic field capable of displacing the piston within the bore substantially along the first axis. A controller is used for selectively controlling energizing of the drive coils. The linear compressor also includes a cooling system at least partially disposed in the housing and the cooling system used for cooling the apparatus.

In another embodiment, the invention provides for an apparatus including a housing having a bore formed therein, the bore being axially oriented along a first axis, a piston reciprocally disposed within the bore, and a plurality of drive coils disposed adjacent the bore for energizing the drive coils to produce a magnetic field capable of displacing the piston within the bore substantially parallel to the first axis. The apparatus also includes a cooling reservoir positioned between the drive coils and the housing, wherein the cooling reservoir reduces compression heat of the apparatus. A sensor determines position and velocity of the piston relative to the housing, wherein the sensor functions independently of the drive coils, and a controller selectively controls the energizing of the drive coils in response to a signal from the sensor.

In yet another embodiment, the invention provides for an apparatus including a housing having a central portion and two end portions, the two end portions being mounted at opposite ends of the central portion, wherein the central portion defines a bore. A piston is reciprocally disposed within the bore and a plurality of drive coils are disposed adjacent the bore for energizing the drive coils to produce a magnetic field capable of displacing the piston within the bore. The apparatus also includes a cooling system at least partially disposed in the housing, the cooling system for reducing compression heat of the apparatus. A sensor is positioned relative to one of the two end portions, the sensor capable of measuring relative distance and velocity between the sensor and the piston. A controller selectively controls the energizing of the drive coils in response to a signal from the sensor.

The foregoing and other aspects will become apparent from the following detailed description of the invention when considered in conjunction with the accompanying drawing figures.

### BRIEF DESCRIPTION OF THE DRAWINGS

Fig. 1 is a side partially cross sectional view of an electric linear actuated compressor according to one embodiment of the invention.

Fig. 2 is a side partially cross sectional view of an electric linear actuated compressor having a cooling reservoir contained within a housing of the compressor.

Fig. 3 is a side partially cross sectional view of the compressor shown in Fig. 2 with a heat exchanger fluidly connected to the cooling reservoir.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The invention is defined by the subject-matter of the appended patent claims.

### DETAILED DESCRIPTION

In this disclosure, the term compressor or pump are intended to be used interchangeably as a mechanism which is designed to displace a working fluid from one location to another.

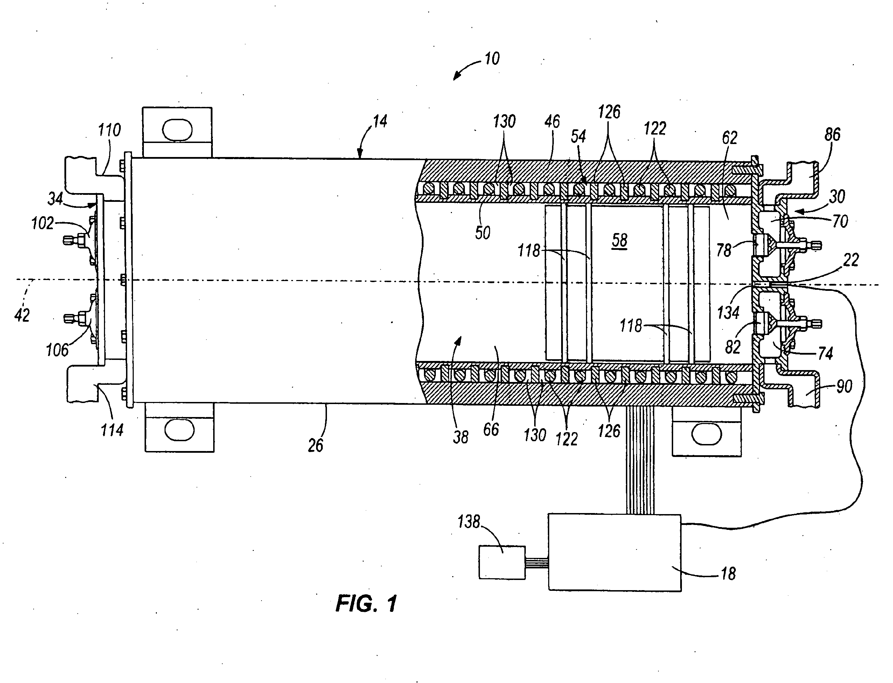

Fig. 1 illustrates an electric linear actuated compressor 10. The compressor 10 includes a housing 14, a controller 18 and a sensor 22. The housing 14 includes a cylindrical central portion 26 and two end portions 30 and 34 at opposite ends of the central portion 26. The central portion 26 defines a bore 38 that is enclosed by the end portions 30, 34, and the bore 38 is axially oriented about a longitudinal axis 42 of the compressor 10. The housing 14 includes an outer wall 46 and an inner wall 50 spaced radially inward from the outer wall 46, such that the bore 38 is defined by the inner wall 50 of the housing 14. The outer wall 46 and the inner wall 50 are spaced apart to form a gap 54 therebetween.

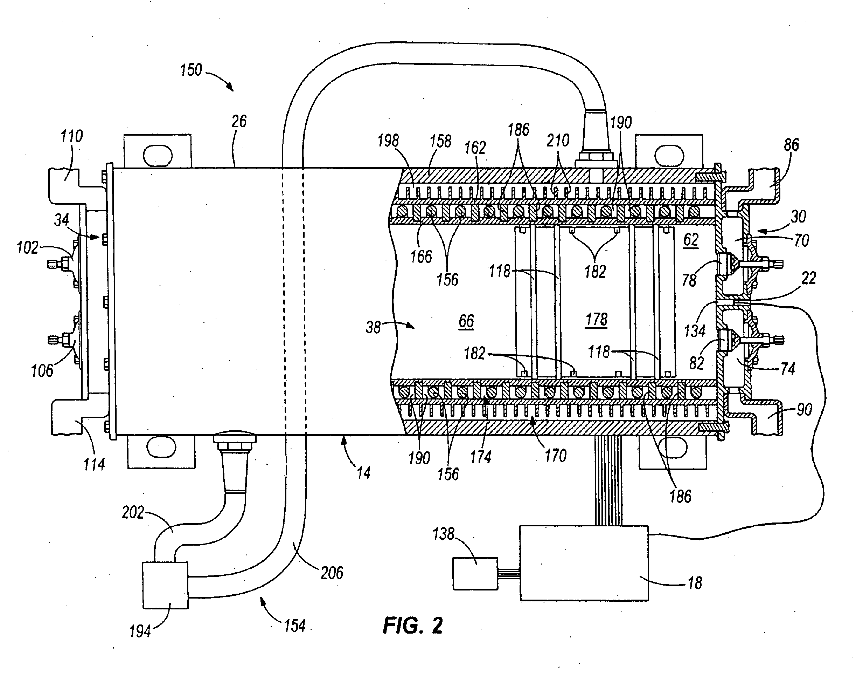

A piston 58 is reciprocally and slidingly disposed within the bore 38. Generally, the piston 58 is formed from any material, or combination of materials, which may be accelerated and decelerated under the influence of magnetic fields. In the illustrated embodiment, the piston 58 is formed of a ferromagnetic material, however, in a further embodiment, the piston 58 is formed from a plurality of permanent magnets as shown in Fig. 2. Within the bore 38, the piston 58 defines a first pressure section 62 proximate the first end portion 30 and a second pressure section 66 proximate the second end portion 34.

The first end portion 30 includes two chambers, an inlet chamber 70 and an outlet chamber 74. An inlet valve 78 fluidly connects the first pressure section 62 and the inlet chamber 70 and an outlet valve 82 fluidly connects the first pressure section 62 and the outlet chamber 74. An inlet conduit 86 fluidly communicates with the inlet chamber 70 of the end portion 30 and provides fluid to the first pressure section 62 through the inlet valve 78, and an outlet conduit 90 fluidly communicates with the outlet chamber 74 of the end portion 30 and discharges fluid from the first pressure section 62 through the outlet valve 82. The second end portion 34 also includes an inlet chamber (not shown) and an outlet chamber (not shown) similar to the inlet and outlet chambers described above. An inlet valve 102 fluidly connects the second pressure section 66 and the inlet chamber, and an outlet valve 106 fluidly connects the second pressure section 66 and the outlet chamber. An inlet conduit 110 fluidly communicates with the inlet chamber of the end portion 34 and provides fluid to the second pressure section 66 through the inlet valve 102, and an outlet conduit 114 fluidly communicates with the outlet chamber of the end portion 34 and discharges fluid from the second pressure section 66 through the outlet valve 114.

The inlet valves 78, 102 and the outlet valves 82, 106 are mounted within the respective end portions 30, 34. The inlet valves 78, 102 and the outlet valves 82, 106 permit fluid flow from a high pressure side to a low pressure side, as is known in the art. For example, the valves may be a flapper type, a finger type, and a popper type. In a further embodiment, the valves may be spring biased whereby the high pressure side has to be increased above the low pressure side by a desired amount before the valve opens, as is known in the art.

As the piston 58 is driven from left to right in Fig. 1, pressure in the first pressure section 62 is increased (high pressure side) while pressure in the second pressure section 66 is decreased (low pressure side). Greater pressure in the first pressure section 62 forces the inlet valve 78 closed and the outlet valve 82 open by fluid pressure, thereby permitting fluid passage from the first pressure section 62 through the outlet conduit 90 and preventing fluid passage from the inlet conduit 86 to the first pressure section 62. Concurrently, movement of the piston 58 from the left to the right reduces pressure in the second pressure section 66. A reduction of pressure in the second pressure section 66 opens the inlet valve 102 and closes the outlet valve 106, thereby permitting fluid passage from the inlet conduit 110 to the second pressure section 66 and preventing fluid passage from the second pressure section 66 to the outlet conduit 114.

When the piston 58 travels from the right to the left in Fig. 1, pressure in the first pressure section 62 is decreased such that the section 62 becomes the low pressure side while pressure in the second pressure section 66 is increased such that the section 66 becomes the high pressure. Greater pressure in the second pressure section 66 forces the inlet valve 102 closed and the outlet valve 106 open by fluid pressure, thereby permitting fluid passage from the second pressure section 66 through the outlet conduit 114 and preventing fluid passage from the inlet conduit 110 to the second pressure section 66. Concurrently, a reduction of pressure in the first pressure section 62 opens the inlet valve 78 and closes the outlet valve 82, thereby permitting fluid passage from the inlet conduit 86 to the first pressure section 62 and preventing fluid passage from the first pressure section 62 to the outlet conduit 90. Thereby, low pressure is permitted to pass into the first pressure section 62 from the inlet conduit 86 and high pressure is permitted to exit from the second pressure section 66 to the outlet conduit 114.

Slide and seal rings 118 are mounted about a periphery of the piston 58 to seal fluid passage along the inner wall 50 of the housing 14 between the first pressure section 62 and the second pressure section 66. In one embodiment, the rings 118 are formed from Teflon® polymer material, from E. I. du Pont de Nemours and Company (Wilmington, DE), or a similar material. In the illustrated embodiment, the compressor 10 is non-lubricated, i.e., oil-free.

In order to accomplish the reciprocation of the piston 58, drive coils 122 are mounted within the gap 54 defined by the outer and inner walls 46, 50 of the housing 14. Each drive coil 122 extends around an outer circumference of the bore 38. A plurality of drive coils 122 are positioned along a length of the bore 38 and are axially spaced apart from each other. The drive coils 122 are selectively energized to produce a magnetic field capable of displacing the piston 58 within the bore 38 substantially along the longitudinal axis 42.

Each drive coil 122 is separated from an adjacent drive coil 122 by a non-magnetic element 126, which is non-conductive. The drive coils 122 are capable of carrying individual currents of a positive, negative or neutral polarity. In the illustrated embodiment, the drive coils 122 are surrounded by a thermal insulator 130 to limit or prevent heat damage to portions of the housing 14 and the piston 58 as the drive coils 122 heat up. It should be readily apparent to those of skill in the art that in further embodiments other insulators may be provided to prevent heat damage to the housing 14 and the piston 58.

The controller 18 and the sensor 22 control charging and discharging of the drive coils 122 to drive the piston 58. The controller 18 selectively controls energizing of the drive coils 122, the sensor 22 determines the position and velocity of the piston 58 relative to the housing 14. The first end portion 30 includes a through channel 134 between the bore 38 and exterior of the compressor 10. In the illustrated embodiment, the sensor 22 is positioned in the channel 134 and aimed at the drive coils 122, and is electrically connected to the controller 18. The sensor 22 is able to precisely sense position and velocity of the piston 58 relative to the housing 14 regardless of temperature, pressure and adverse affects of the fluid being compressed. The sensor 22 may be of the microwave or the optical variety. Some sensors are extremely sensitive to changes in temperature and pressure, which may be commonly encountered in this environment, and should not be used with the compressor 10.

In the illustrated embodiment, the sensor 22 functions independently of the electric current or voltage in the drive coils 122, which may vary based on temperature, pressure or some other criterion as well as position of the piston 58 relative to the drive coils 122. Thus, the sensor 22 will more accurately and directly take positional and velocity measurements. In compressors where there are relatively large distances between adjacent drive coils 122, sensors that rely upon the current and voltage through the drive coils 122 based upon piston position may have limited accuracy in determining the exact piston position. In the illustrated embodiment, velocity measurements of the sensor 22 are not limited based upon the relative position between the piston 58 and the drive coil 122 or the number of drive coils 122. For example, the piston position and velocity sensor 22 of the present invention would function well if there were only two drive coils 122 disposed on opposed axial ends of the bore 38. By comparison, in other compressors the accuracy of piston position and velocity sensing systems relying upon current and voltage in the drive coils would suffer if the drive coils were disposed adjacent opposed, distant ends of the bore. Further, in the present invention, when the sensor 22 functions independently of current or voltage in the drive coils 122 and one of the drive coils 122 fail, the failure of a drive coil 122 does not result in a disruption of the piston cycle or damage to the compressor 10. In one embodiment, the sensor operates by utilizing electromagnetic radiation in excess of 1 gigahertz.

The controller 18 includes an electronic sequencer (not shown) and is operable to control selective energizing and de-energizing of the drive coils 122. The controller 18 controls the drive coils 122 based upon relative velocity and position of the piston 58 within the bore 38 formed in the housing 14 as compared to the desired velocity and stroke of the piston 58 within the bore 38. The drive coils 122 are charged with either a positive polarity or a negative polarity, based upon the desired travel direction of the piston 58. With a preprogrammed sequencer, drive coils 122 could be energized, or magnetized, one after another. In the illustrated embodiment, the controller 18 may facilitate variable speed of the piston 58. Speed is varied by current regulation to the drive coils 122 and variable load does not affect compressor performance because the sequencer can identify where the piston 58 is positioned. Therefore, sequencer speed and coil currents are programmed to compensate for these changes.

In one embodiment, the sensor 22 projects a frequency into the bore 38 that is used to identify the piston location and velocity. The controller 18 receives feedback from the sensor 22, and load factor and/or reciprocating speeds are compensated for such that the sequencer speed and current are adjusted to the work performed by the compressor 10.

In the illustrated embodiment, the compressor 10 includes an operator interface 138 electrically connected to the controller 18. Using the interface 138, the operator may set a desired velocity (cycles per minute) and a desired stroke (length per stroke) at which the controller 18 will operator the compressor 10 and the piston 58. Any device that permits an operator to input the desired velocity and stroke to the controller 18 may be used as the interface 138, as is known in the art.

One factor is using the compressor 10 shown in Fig. 1 is controlling compression heat (i.e., heat produced by the compressor 10 in the process of compressing the working fluid) and energizing heat (i.e., heat generated by the energizing and de-energizing of the drive coils 122). With an increase in temperature in the compressor 10, force exerted by the drive coils 122 upon the piston 58 decreases. In one embodiment, a heat removal system is used to remove compression heat and energizing heat, which further decreases the temperature of the compressor 10 to more efficient levels and force exerted by the drive coils 122 upon the piston 58 increases. A heat removal system is critical as the size of the compressor 10 increases due to the large amount of compression heat generated by larger compressors and the large amount of energizing heat produced by large drive coils required for such compressors.

An increased temperature of the drive coils 122 typically results in an increased electric flow through the drive coils 122 to produce the same force on the piston 58 by the drive coils 122. Therefore, maintaining the piston 58 at a relatively high stroke length and frequency, especially if the working fluid is extremely viscous, may result in a gradual increase in operating temperature of the compressor 10, which thereby results in damage to, or a failure of, the compressor 10 from overheating.

One system that may be used to reduce the energizing heat in the compressor is to utilize drive coils 122 formed from superconducting material. A superconducting material will exhibit minimal resistance at superconducting temperatures, therefore, the heat produced by a superconductor drive coil will be extremely low compared to that produced from a non-superconductive drive coil. A heat removal system, or cooling system, is still used to remove compression heat from the compressor while maintaining the superconductor at a superconducting temperature (i.e., a temperature wherein the drive coils continue to exhibit superconductive characteristics). A superconductor, as defined herein, covers all materials that display a considerable reduction in electrical resistance, to an extremely low level, when the temperature of the material is lowered below a superconducting temperature specific for that material.

Fig. 2 illustrates an electric linear actuated compressor 150 according to one embodiment of the invention. The compressor 150 is similar to the compressor 10 shown in Fig. 1, and like elements will be referenced by the same reference numerals. The compressor 150 includes a cooling system 154 for reducing compression heat within the compressor 150 and uses superconducting drive coils 156, as described above, to reduce energizing heat in the compressor 150.

The compressor housing 14 includes the central portion 26 that defines a bore 38 enclosed by the end portions 30, 34. The housing 14 includes an outer wall 158, an intermediate wall 162 spaced radially inward from the outer wall 158, and an inner wall 166 spaced radially inward from the intermediate wall 162, such that the bore 38 is defined by the inner wall 166 of the housing 14. The three walls 158, 162, 166 are spaced apart from each other to form first and second gaps 170, 174 therebetween.

In the illustrated embodiment, a piston 178 is reciprocally and slidingly disposed within the bore 38. The piston 178 is at least partially formed from a plurality of permanent magnets 182 positioned about a periphery of the piston 178. The piston 178 is accelerated and decelerated under the influence of magnetic fields, as described above with respect to Fig. 1. In order to accomplish reciprocation of the piston, drive coils 156 are mounted in the second gap 174 defined by the intermediate and inner walls 162, 166 of the housing 14 similar to the drive coils 122 described above with respect to Fig. 1. The drive coils 156 are formed of a superconducting material, which reduces the energizing heat generated by the energizing and de-energizing of the drive coils 156. Each drive coil 156 is separated from an adjacent drive coil 156 by a non-magnetic element 186, which is non-conductive. Further, each drive coil 156 is surrounded by a thermal insulator 190 to further limit heat damage to portions of the housing 14 and the piston 178 as the drive coils 156 heat up, although other known insulators may be provided.

In order to permit the use of superconducting drive coils 156, Fig. 2 illustrates the cooling system 154 including a cooling pump 194, a cooling reservoir 198 within the housing 14, an inlet conduit 202, and an outlet conduit 206. The conduits 202, 206 fluidly connect the cooling pump 194 and the cooling reservoir 198. The cooling reservoir 198 is defined by the first gap 170, which is defined by the outer and intermediate walls 158, 162 of the housing 14. The cooling reservoir 198 includes vanes 210 extending radially outward from the intermediate wall 162 of the housing 14. To cool the compressor 10 and the drive coils 156, cooling fluid is pumped from the cooling pump 194 to the cooling reservoir 198 via the inlet conduit 202. The vanes 210 assist in a heat exchange between the compressor 150 and the cooling fluid and also direct the flow of cooling fluid to ensure that the cooling fluid reaches all locations about a circumferential periphery of the housing 14. Further, the vanes 210 act to slow the flow of cooling fluid at critical locations to ensure proper heat transfer. The cooling fluid is discharged through the outlet conduit 206 back to the cooling pump 194 for reuse.

Examples of the cooling fluids that may be used by the cooling system include Freon® chlorofluorocarbons, from E. I. du Pont de Nemours and Company (Wilmington, DE), and argon, which are relatively inexpensive and in ready supply. It should be readily apparent to those of skill in the art that other cryogenic fluids and equipment of a type known in the cooling art may be used in the cooling system.

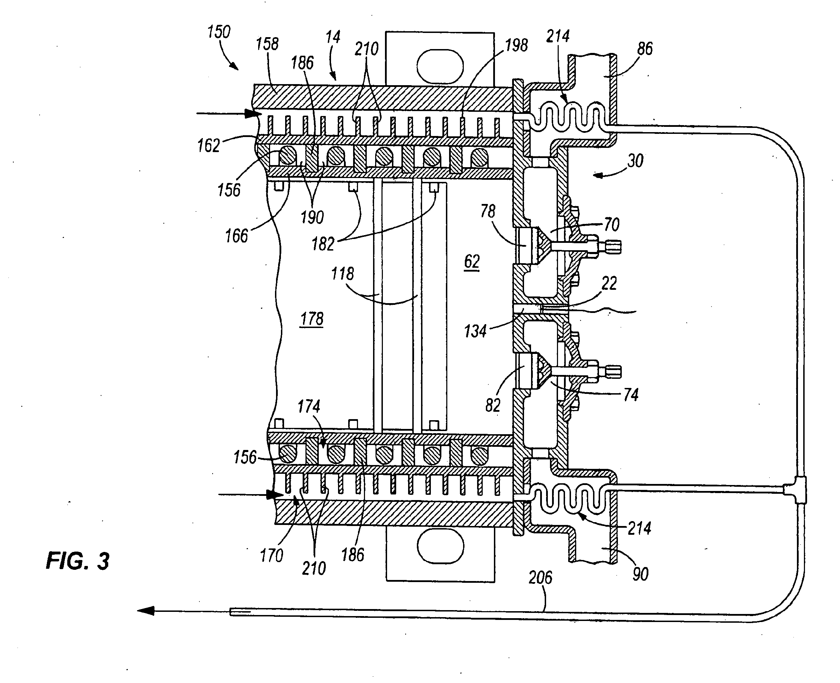

Fig. 2 limits the passage of the cooling fluid to the cooling reservoir 198 contained within the housing. Fig. 3 illustrates another embodiment of the compressor 150 shown in Fig. 2 including a heat exchanger 214 for further limiting compression heat produced by the compressor 150. The cooling fluid further passes through the heat exchanger 214 prior to returning to the cooling pump 194 (via the outlet conduit 206). In the illustrated embodiment, the heat exchanger 214 is formed within an inlet portion and an outlet portion of the compressor 150 formed by the inlet and outlet conduits 86, 90 of the end portion 30. It should be readily apparent to those of skill in the art that the heat exchanger 214 may be positioned elsewhere in the compressor 150 or external to the compressor.

Various features and advantages of the invention are set forth in the following claims.

## Claims

1. An apparatus (10, 150) comprising:
a housing (14) having a bore (38) formed therein, the bore being axially oriented along a first axis;
a piston (58, 178) reciprocally disposed within the bore;
a plurality of drive coils (122, 156) adjacent the bore for energizing the drive coils to produce a magnetic field capable of displacing the piston within the bore substantially along the first axis;
a controller (18) for selectively controlling energizing of the drive coils; and
a cooling system (154) at least partially disposed in the housing, the cooling system for cooling the apparatus
**characterized in that** the drive coils are configured such that they are energisable in a positive polarity to move the piston in a first direction and energisable in a negative polarity to move the piston in a second direction.

2. The apparatus of claim 1, and further comprising a sensor (22) positioned relative one end of the housing, the sensor capable of measuring relative distance and velocity between the sensor and the piston (58, 178), wherein the controller (18) selectively energizes the drive coils (122, 156) in response to a signal from the sensor.

3. The apparatus of claim 1 wherein the cooling system (154) includes a cooling reservoir (198) positioned between the drive coils (122, 156) and the housing.

4. The apparatus of claim 3 where the cooling system includes a pump (194) configured for pumping cooling fluid through the cooling reservoir (198) and conduit for fluidly connecting the pump and the cooling reservoir.

5. The apparatus of claim 3 wherein the cooling reservoir (198) includes vanes (210) formed therein.

6. The apparatus of claim 5 wherein the vanes (210) impact a flow of cooling fluid through the cooling reservoir (198).

7. The apparatus of claim 5 wherein the vanes (210) facilitate a transfer of heat between heat produced by the apparatus and cooling fluid contained within the cooling reservoir (198).

8. The apparatus of claim 1, and further comprising a heat exchanger (214) for further reducing compression heat of the apparatus (10, 150).

9. The apparatus of claim 8 wherein the heat exchanger (214) is positioned within an inlet portion of the housing.

10. The apparatus of claim 8 wherein the heat exchanger (214) is positioned within an outlet portion of the housing (14).

11. The apparatus of claim 1 wherein the drive coils (122, 156) are formed from a superconductive material to facilitate cooling of the apparatus.

12. The apparatus of claim 11 wherein the cooling system (154) is sufficient to maintain a temperature of the drive coils at a superconducting temperature.

13. The apparatus of claim 1, and further comprising
a cooling reservoir (198) positioned between the drive coils (122, 156) and the housing, wherein the cooling reservoir (198) reduces compression heat of the apparatus;
a sensor (22) for determining position and velocity of the piston (58, 178) relative to the housing, therein the sensor functions independently of the drive coils; and
a controller (18) for selectively controlling the energizing of the drive coils (122, 156) in response to a signal from the sensor.

14. The apparatus of claim 13 wherein the piston (58, 178) is formed from a ferromagnetic material.

15. The apparatus of claim 13 wherein the piston (58, 178) includes a plurality of permanent magnets (182).

16. The apparatus of claim 13 wherein the drive coils (122, 156) are formed from a superconductor material.

17. The apparatus of claim 13 wherein cooling fluid circulates through the cooling reservoir (198).

18. The apparatus of claim 17, and further comprising a pump (194) for pumping cooling fluid through the cooling reservoir (198).

19. The apparatus of claim 17, and further comprising a heat exchanger (214) for further reducing compression heat of the apparatus, wherein the apparatus is fluidly connected to the cooling reservoir (198).

20. The apparatus of claim 13 wherein the cooling reservoir (198) includes vanes (210) formed within the cooling reservoir.

21. The apparatus of claim 13 wherein application of an electric current to the drive coils (122; 156) produces the magnetic field and the sensor functions independently of the electric current.

22. The apparatus of claim 13 wherein the sensor (22) functions independently of the magnetic field.

23. The apparatus of claim 13 wherein the sensor (22) functions independently of any inductance formed between the piston (58, 178) and the bore (38).

24. The apparatus of claim 13 wherein the apparatus (10, 150) is a linear compressor.

25. The apparatus of claim 1, and further comprising
a central portion (26) and two end portions (30 and 34) of the housing, the two end portions being mounted at opposite ends of the central portion, wherein the central portion defines the bore (38),
a cooling system (154) at least partially disposed in the housing, the cooling system for reducing compression heat of the apparatus;
a sensor (22) positioned relative to one of the two end portions, the sensor capable of measuring relative distance and velocity between the sensor and the piston; and
a controller (18) for selectively controlling the energizing of the drive coils in response to a signal from the sensor.

26. The apparatus of claim 25 wherein the cooling system (154) comprises:
a cooling reservoir (198) positioned between the drive coils and the housing;
a pump (194) configured for pumping cooling fluid through the cooling reservoir; and
conduit (206) for fluidly connecting the pump and the cooling reservoir.

27. The apparatus of claim 26 wherein the cooling reservoir (198) includes vanes (210) formed therein.

28. The apparatus of claim 26 wherein the cooling system (154) includes a heat exchanger (214) positioned between an outlet of the cooling reservoir (198) and the pump, the heat exchanger for further reducing compression heat of the apparatus.

29. The apparatus of claim 25, and further comprising a heat exchanger (214) for further reducing compression heat of the apparatus (10, 150).

30. The apparatus of claim 25, and further comprising an operator interface (138) for inputting a desired stroke and velocity of the piston (58, 178) relative to the housing (14), wherein the controller (18) operates the maintain the piston (58, 178) at the desired stroke and velocity based upon measured distance and velocity between the sensor (22) and the piston.

31. The apparatus of claim 25 wherein the controller (18) includes a sequencer to control actuation and de-actuation of the drive coils (122, 156).

32. The apparatus of claim 25 wherein the sensor (22) operates utilizing electromagnetic radiation in excess of one gigahertz.

33. The apparatus of claim 25 wherein the sensor (22) is a microwave sensor.

34. The apparatus of claim 25 wherein the sensor (22) is an optical sensor.

35. The apparatus of claim 25 wherein the apparatus (10, 150) is a linear compressor.

## Patentansprüche

1. Vorrichtung (10, 150), die Folgendes umfasst:
ein Gehäuse (14), das eine in demselben geformte Bohrung (38) hat, wobei die Bohrung axial längs einer ersten Achse ausgerichtet ist,
einen Kolben (58, 178), der hin- und hergehend innerhalb der Bohrung angeordnet ist,
mehrere Treiberspulen (122, 156) angrenzend an die Bohrung, um die Treiberspulen zu erregen, um ein Magnetfeld zu erzeugen, das dazu in der Lage ist, den Kolben innerhalb der Bohrung im Wesentlichen längs der ersten Achse zu verschieben,
ein Steuergerät (18) zum selektiven Steuern des Erregens der Treiberspulen und
ein Kühlsystem (154), das wenigstens teilweise innerhalb des Gehäuses angeordnet ist, wobei das Kühlsystem zum Kühlen der Vorrichtung dient,
**dadurch gekenntzeichnet, dass** die Treiberspulen derart konfiguriert sind, dass sie in einer positiven Polarität erregt werden können, um den Kolben in einer ersten Richtung zu bewegen, und in einer negativen Polarität erregt werden können, um den Kolben in einer zweiten Richtung zu bewegen.

2. Vorrichtung nach Anspruch 1 und die ferner einen Sensor (22) umfasst, der im Verhältnis zu einem Ende des Gehäuses angeordnet ist, wobei der Sensor dazu in der Lage ist, einen relativen Abstand und eine relative Geschwindigkeit zwischen dem Sensor und dem Kolben (58, 178) zu messen, wobei das Steuergerät (18) als Reaktion auf ein Signal von dem Sensor selektiv die Treiberspulen (122, 156) erregt.

3. Vorrichtung nach Anspruch 1, wobei das Kühlsystem (154) einen Kühlbehälter (198) einschließt, der zwischen den Treiberspulen (122, 156) und dem Gehäuse angeordnet ist.

4. Vorrichtung nach Anspruch 3, wobei das Kühlsystem eine Pumpe (194), die dafür konfiguriert ist, ein Kühlfluid durch den Kühlbehälter (198) zu pumpen, und eine Leitung für eine Fliuidverbindung der Pumpe und des Kühlbehälters einschließt.

5. Vorrichtung nach Anspruch 3, wobei der Kühlbehälter (198) in demselben geformte Schaufeln (210) einschließt.

6. Vorrichtung nach Anspruch 5, wobei die Schaufeln (210) einen Strom von Kühlfluid durch den Kühlbehälter (198) verdichten.

7. Vorrichtung nach Anspruch 5, wobei die Schaufeln (210) eine Wärmeübertragung zwischen der durch die Vorrichtung erzeugten Wäre und dem innerhalb des Kühlbehälters (198) enthaltenen Kühlfluid erleichtern.

8. Vorrichtung nach Anspruch 1 und die ferner einen Wärmeaustauscher (214) umfasst, um die Kompressionswärme der Vorrichtung (10, 150) weiter zu verringern.

9. Vorrichtung nach Anspruch 8, wobei der Wärmeaustauscher (214) innerhalb eines Einlassabschnitts des Gehäuses angeordnet ist.

10. Vorrichtung nach Anspruch 8, wobei der Wärmeaustauscher (214) innerhalb eines Auslassabschnitts des Gehäuses (14) angeordnet ist.

11. Vorrichtung nach Anspruch 1, wobei die Treiberspulen (122, 156) aus supraleitfähigem Material hergestellt sind, um das Kühlen der Vorrichtung zu erleichtern.

12. Vorrichtung nach Anspruch 11, wobei das Kühlsystem (154) dafür ausreichend ist, eine Temperatur der Treiberspulen bei einer Supraleitungstemperatur zu halten.

13. Vorrichtung nach Anspruch 1 und die ferner Folgendes umfasst:
einen Kühlbehälter (198), der zwischen den Treiberspulen (122, 156) und dem Gehäuse angeordnet ist, wobei der Kühlbehälter (198) die Kompressionswärme der Vorrichtung verringert,
einen Sensor (22), um eine Position und eine Geschwindigkeit des Kolbens (58, 178) im Verhältnis zu dem Gehäuse zu bestimmen, wobei der Sensor unabhängig von den Treiberspulen funktioniert, und
ein Steuergerät (18) zum selektiven Steuern des Erregens der Treiberspulen (122, 156) als Reaktion auf ein Signal von dem Sensor.

14. Vorrichtung nach Anspruch 13, wobei der Kolben (58, 178) aus einem ferromagnetischen Material hergestellt ist.

15. Vorrichtung nach Anspruch 13, wobei der Kolben (58, 178) mehrere Dauermagneten (182) einschließt.

16. Vorrichtung nach Anspruch 13, wobei die Treiberspulen (122, 156) aus einem Supraleitermaterial hergestellt sind.

17. Vorrichtung nach Anspruch 13, wobei ein Kühlfluid durch den Kühlbehälter (198) umläuft.

18. Vorrichtung nach Anspruch 17 und die fernen eine Pumpe (194) zum Pumpen von Kühlfluid durch den Kühlbehälter (198) umfasst.

19. Vorrichtung nach Anspruch 17 und die ferner einen Wärmeaustauscher (214) umfasst, um die Kompressionswärme der Vorrichtung weiter zu verringern, wobei die Vorrichtung in Fluidverbindung mit dem Kühlbehälter (198) steht.

20. Vorrichtung nach Anspruch 13, wobei der Kühlbehälter (198) innerhalb des Kühlbehälters geformte Schaufeln (210) umfasst.

21. Vorrichtung nach Anspruch 13, wobei ein Anlegen eines elektrischen Stroms an die Treiberspulen (122, 156) das Magnetfeld erzeugt und der Sensor unabhängig von dem elektrischen Strom funktioniert.

22. Vorrichtung nach Anspruch 13, wobei der Sensor (22) unabhängig von dem Magnetfeld funktioniert.

23. Vorrichtung nach Anspruch 13, wobei der Sensor (22) unabhangig von jeglicher zwischen dem Kolben (58, 178) und der Bohrung (38) hergestellter Induktivität funktioniert.

24. Vorrichtung nach Anspruch 13, wobei die Vorrichtung (10, 150) ein linearer Kompressor ist.

25. Vorrichtung nach Anspruch 1 und die ferner Folgendes umfasst:
einen Mittelabschnitt (26) und zwei Endabschnitte (30 und 34) des Gehäuses, wobei die zwei Endabschnitte an entgegengesetzten Enden des Mittelabschnitts angebracht sind, wobei der Mittelabschnitt die Bohrung (38) definiert,
ein Kühlsystem (154), das wenigstens teilweise innerhalb des Gehäuses angeordnet ist, wobei das Kühlsystem zum Verringern der Kompressionswärme der Vorrichtung dient,
einen Sensor (22), der im Verhältnis zu einem der zwei Endabschnitte angeordnet ist, wobei der Sensor dazu in der Lage ist, einen relativen Abstand und eine relative Geschwindigkeit zwischen dem Sensor und dem Kolben zu messen, und
ein Steuergerät (18) zum selektiven Steuern des Erregens der Treiberspulen als Reaktion auf ein Signal von dem Sensor.

26. Vorrichtung nach Anspruch 25, wobei das Kühlsystem (154) Folgendes umfasst:
einen Kühlbehälter (198) der zwischen den Treiberspulen und dem Gehäuse angeordnet ist,
eine Pumpe (194), die dafür konfiguriert ist, ein Kühlfluid durch den Kühlbehälter zu pumpen, und
eine Leitung (206) für eine Fluidverbindung der Pumpe und des Kühlbehälters.

27. Vorrichtung nach Anspruch 26, wobei der Kühlbehälter (198) in demselben geformte Schaufeln (210) einschließt.

28. Vorrichtung nach Anspruch 26, wobei das Kühlsystem (194) einen Wärmeaustauscher (214) einschließt, der zwischen dem Auslass des Kühlbehälters (198) und der Pumpe angeordnet ist, wobei der Wärmeaustauscher dazu dient, die Kompressionswärme der Vorrichtung weiter zu verringern.

29. Vorrichtung nach Anspruch 25 und die ferner einen Wärmeaustauscher (214) umfasst, um die Kompressionswärme der Vorrichtung (10, 150) weiter zu verringern.

30. Vorrichtung nach Anspruch 25 und die ferner eine Bedienerschnittstelle (138) umfasst, um einen gewünschten Hub und eine gewünschte Geschwindigkeit des Kolbens (58, 178) im Verhältnis zu dem Gehäuses (14) einzugeben, wobei das Steuergerät (18) arbeitet, um auf der Grundlage des gemessenen Abstands und der gemessenen Geschwindigkeit zwischen dem Sensor (22) und dem Kolben den Kolben (58, 178) bei dem gewünschten Hub und der gewünschten Geschwindigkeit zu halten.

31. Vorrichtung nach Anspruch 25, wobei das Steuergerät (18) einen Sequenzer einschließt, um das Aktivieren und Deaktivieren der Treiberspulen (122, 156) zu steuern.

32. Vorrichtung nach Anspruch 25, wobei der Sensor (22) unter Benutzung von elektromagnetischer Strahlung von über einem Gigahertz arbeitet.

33. Vorrichtung nach Anspruch 25, wobei der Sensor (22) ein Mikrowellensensor ist.

34. Vorrichtung nach Anspruch 25, wobei der Sensor (22) ein optischer Sensor ist.

35. Vorrichtung nach Anspruch 25, wobei die Vorrichtung (10, 150) ein linearer Kompressor ist.

## Revendications

1. Appareil (10, 50), comprenant :
un boîtier (14) comportant un alésage (38) qui y est formé, l'alésage étant orienté axialement le long d'un premier axe ;
un piston (58, 178) agencé dans l'alésage et pouvant y effectuer un déplacement alternatif;
plusieurs bobines d'excitation (122, 156) adjacentes à l'alésage, pour exciter les bobines d'excitation afin de produire un champ magnétique capable de déplacer le piston dans l'alésage, pratiquement le long du premier axe ;
un dispositif de commande (18) pour contrôler sélectivement l'excitation des bobines d'excitation ;
et
un système de refroidissement (154) agencé au moins partiellement dans le boîtier, le système de refroidissement servant à refroidir l'appareil ;
**caractérisé en ce que** les bobines d'excitation sont configurées de sorte qu'elles peuvent être excitées dans une polarité positive pour déplacer le piston dans un première direction, et excitées dans une polarité négative pour déplacer le piston dans une deuxième direction.

2. Appareil selon la revendication 1, comprenant en outre un capteur (22) positionné par rapport à une extrémité du boîtier, le capteur étant capable de mesurer la distance relative et la vitesse relative entre le capteur et le piston (58, 178), le dispositif de commande (18) assurant l'excitation sélective des bobines d'excitation (122, 156) en réponse à un signal transmis par le capteur.

3. Appareil selon la revendication 1, dans lequel le système de refroidissement (154) englobe un réservoir de refroidissement (198) positionné entre les bobines d'excitation (122, 156) et le boîtier.

4. Appareil selon la revendication 3, dans lequel le système de refroidissement englobe une pompe (194), configurée de sorte à pomper un fluide de refroidissement à travers le réservoir de refroidissement (198), et un conduit pour établir une connexion de fluide entre la pompe et le réservoir de refroidissement.

5. Appareil selon la revendication 3, dans lequel le réservoir de refroidissement (198) englobe des aubes (210) qui y sont formées.

6. Appareil selon la revendication 5, dans lequel les aubes (210) heurtent un écoulement de fluide de refroidissement traversant le réservoir de refroidissement (198).

7. Appareil selon la revendication 5, dans lequel les aubes (210) facilitent un transfert de chaleur entre la chaleur produite par l'appareil et le fluide de refroidissement contenu dans le réservoir de refroidissement (198).

8. Appareil selon la revendication 1, comprenant en outre un échangeur de chaleur (214) pour réduire davantage la chaleur de compression de l'appareil (10, 150).

9. Appareil selon la revendication 8, dans lequel l'échangeur de chaleur (214) est positionné dans une partie d'entrée du boîtier (14).

10. Appareil selon la revendication 8, dans lequel l'échangeur de chaleur (214) est positionné dans une partie de sortie du boîtier (14).

11. Appareil selon la revendication 1, dans lequel les bobines d'excitation (112, 156) sont formées à partir d'un matériau supraconducteur pour faciliter le refroidissement de l'appareil.

12. Appareil selon la revendication 11, dans lequel le système de refroidissement (154) est suffisant pour maintenir une température des bobines d'excitation à une température supraconductrice.

13. Appareil selon la revendication 1, comprenant en outre :
un réservoir de refroidissement (198), positionné entre les bobines d'excitation (112, 156) et le boîtier, le réservoir de refroidissement (198) réduisant la chaleur de compression de l'appareil ;
un capteur (22) servant à déterminer la position et la vitesse du piston (58, 178) par rapport au boîtier, le capteur fonctionnant indépendamment des bobines d'excitation ; et
un dispositif de commande (18) pour contrôler sélectivement l'excitation des bobines d'excitation (122, 156) en réponse à un signal transmis par le capteur.

14. Appareil selon la revendication 13, dans lequel le piston (58, 178) est formé à partir d'un matériau ferromagnétique.

15. Appareil selon la revendication 13, dans lequel le piston (58, 178) englobe plusieurs aimants permanents (182).

16. Appareil selon la revendication 13, dans lequel les bobines d'excitation (122, 156) sont formées à partir d'un matériau supraconducteur.

17. Appareil selon la revendication 13, dans lequel le fluide de refroidissement circule à travers le réservoir de refroidissement (198).

18. Appareil selon la revendication 17, comprenant en outre une pompe (194) pour pomper un fluide de refroidissement à travers le réservoir de refroidissement (198).

19. Appareil selon la revendication 17, comprenant en outre un échangeur de chaleur (214) pour réduire davantage la chaleur de compression de l'appareil, une connexion de fluide étant établie entre l'appareil et le réservoir de refroidissement (198).

20. Appareil selon la revendication 13, dans lequel le réservoir de refroidissement (198) englobe des aubes (210) formées dans le réservoir de refroidissement.

21. Appareil selon la revendication 13, dans lequel l'application d'un courant électrique aux bobines d'excitation (112, 156) produit un champ magnétique, le capteur fonctionnant indépendamment du courant électrique.

22. Appareil selon la revendication 13, dans lequel le capteur (22) fonctionne indépendamment du champ magnétique.

23. Appareil selon la revendication 13, dans lequel le capteur (22) fonctionne indépendamment d'une quelconque inductance formée entre le piston (58, 178) et l'alésage (38).

24. Appareil selon la revendication 13, dans lequel l'appareil (10, 150) est constitué par un compresseur linéaire.

25. Appareil selon la revendication 1, comprenant en outre :
une partie centrale (26) et deux parties d'extrémité (30 et 34) du boîtier, les deux parties d'extrémité étant montées au niveau des extrémités opposées de la partie centrale, la partie centrale définissant l'alésage (38) ;
un système de refroidissement (154) agencé au moins en partie dans le boîtier, le système de refroidissement servant à réduire la chaleur de compression de l'appareil ;
un capteur (22) positionné par rapport à l'une des deux parties d'extrémité, le capteur étant capable de mesurer la distance relative et la vitesse relative entre le capteur et le piston ; et
un dispositif de commande (18) pou contrôler de manière sélective l'excitation des bobines d'excitation en réponse à un signal transmis par le capteur.

26. Appareil selon la revendication 25, dans lequel le système de refroidissement (154) comprend :
un réservoir de refroidissement (198) positionné entre les bobines d'excitation et le boîtier ;
une pompe (194), configurée de sorte à pomper un fluide de refroidissement à travers le réservoir de refroidissement ; et
un conduit (206) pour établir une connexion de fluide entre la pompe et le réservoir de refroidissement.

27. Appareil selon la revendication 26, dans lequel le réservoir de refroidissement (198) englobe des aubes (210) qui y sont formées.

28. Appareil selon la revendication 26, dans lequel le système de refroidissement (194) englobe un échangeur de chaleur (214) positionné entre une sortie du réservoir de refroidissement (198) et la pompe, l'échangeur de chaleur servant à réduire davantage la chaleur de compression de l'appareil.

29. Appareil selon la revendication 25, comprenant en outre un échangeur de chaleur (214) pour réduire davantage la chaleur de compression de l'appareil (10, 150).

30. Appareil selon la revendication 25, comprenant en outre une interface opérateur (138) pour entrer une course et une vitesse voulues du piston (58, 178) par rapport au boîtier (14), le dispositif de commande (18) servant à maintenir la course et la vitesse voulues du piston (58, 178) sur la base de la distance et de la vitesse mesurées entre le capteur (22) et le piston.

31. Appareil selon la revendication 25, dans lequel le dispositif de commande (18) englobe un séquenceur pour contrôler l'actionnement et la désactivation des bobines d'excitation (122, 156).

32. Appareil selon la revendication 25, dans lequel le capteur (22) fonctionne par l'intermédiaire d'un rayonnement électromagnétique supérieur à un gigahertz.

33. Appareil selon la revendication 25, dans lequel le capteur (22) est un capteur à hyperfréquence.

34. Appareil selon la revendication 25, dans lequel le capteur (22) est un capteur optique.

35. Appareil selon la revendication 25, dans lequel l'appareil (10, 150) est un compresseur linéaire.
